# EUROPÄISCHE PATENTANMELDUNG

(11) **EP 1 289 246 A2**
(43) Veröffentlichungstag der Anmeldung: **05.03.2003**
(21) Anmeldenummer: 02019326.4
(22) Anmeldetag: 29.08.2002
(51) Int. Cl.: H04M 3/53, H04Q 7/22

(54) **Verfahren zur Weiterleitung und Entgegennahme von Kurznachrichten im öffentlichen Telekommunikationsnetz**

(30) Priorität: 31.08.2001 DE 10142680
(71) Anmelder: Materna GmbH Information & Communications, 44141 Dortmund (DE)
(72) Erfinder: Heling, Guido, 44263 Dortmund (DE)
(74) Vertreter: Patentanwälte Meinke, Dabringhaus und Partner

(57) **Zusammenfassung**

Mit einem Verfahren zur Weiterleitung und Entgegennahme von Kurznachrichten im öffentlichen Telekommunikationsnetz unter Beteiligung kurznachrichtenfähiger Endgeräte und beliebiger Endgeräte einer Teilnehmergruppe und/oder Benachrichtigungssysteme, wobei die Nachrichten über ein Relay-Server-Element an Endgeräte einer Teilnehmergruppe und/oder Benachrichtigungssysteme weitergereicht bzw. von diesen entgegengenommen werden, soll eine Lösung geschaffen werden, mit der die Kommunikation zwischen kurznachrichtenfähigen Endgeräten (Mobilstationen und/oder Festnetzgeräten) einerseits und beliebigen Endgeräten einer Teilnehmergruppe und/oder eines Messaging-Systemes andererseits möglich wird.

Dies wird dadurch erreicht, dass Querverbindungsleitungs-Auswahlziffern aus der Rufnummer des absendenden Endgerätes (11,13,14) bei der Auslieferung in Richtung des öffentlichen Telekommunikationsnetzes (4,7) entfernt und bei Eingang einer Kurznachricht aus dem öffentlichen Telekommunikationsnetz (4,7) in Richtung des ursprünglichen absendenden Endgerätes (11,13,14) wieder eingefügt werden.

## Beschreibung

Die Erfindung betrifft ein Verfahren zur Weiterleitung und Entgegennahme von Kurznachrichten im öffentlichen Telekommunikationsnetz unter Beteiligung kurznachrichtenfähiger Endgeräte und beliebiger Endgeräte einer Teilnehmergruppe und/oder Benachrichtigungssysteme, wobei die Nachrichten über ein Relay-Server-Element an Endgeräte einer Teilnehmergruppe und/oder Benachrichtigungssysteme weitergereicht bzw. von diesen entgegengenommen werden.

Bekannt sind Mobilkommunikationssysteme, insbesondere Kurznachrichtensysteme zur Weiterleitung von Nachrichten, die von mit Absendernummern versehenen Mobilstationen (MS, MS') mobiler Teilnehmer gesendet oder von externen Gateways in ein Mobilfunknetz eingespeist werden können, in einem Mobilfunknetz mit einer aus Funkzellen aufgebauten zellularen Netzstruktur. Derartige Mobilfunknetze weisen funktechnische Einrichtungen zum Senden und Empfangen von Signalisierungs- und/oder Nutzinformationen zu/von den Mobilstationen sowie vermittlungstechnische Einrichtungen zum Durchschalten von Signalisierungs- und/ oder Nutzverbindungen auf. Speichereinrichtungen enthalten die Teilnehmerdaten der registrierten mobilen Teilnehmer, die Anrufe absetzen und/oder entgegennehmen wollen. Darüber hinaus gibt es Systeme, mit deren Hilfe Datensätze, insbesondere als Kurznachrichten bezeichnete Nutzinformationen zur Weiterleitung an einzelne und/oder mehrere Empfänger aufgezeichnet werden können.

Auch gibt es bereits Einrichtungen zur Benutzung eines gattungsgemäßen Kurznachrichtensystems in einem Festnetztelefonnetz und zum Austausch von Kurznachrichten zwischen Mobilfunk- und Festnetztelefonnetzen, so dass beispielsweise auch von einer Mobilstation abgesandte Kurznachrichten von einem Festnetztelefon empfangen werden können und umgekehrt (sogenannte fired-network short message services).

So beschreibt die GB 2 357 936 A ein Verfahren und eine Vorrichtung zur Beförderung von Kurznachrichten von einem Festnetztelefonnetzwerk in ein Mobilfunktelefonnetz unter der Benutzung von zwei zwischengeschalteten Server-Systemen, wovon eines das Short-Message-Service-Center des Mobilfunknetzwerkes ist. Dabei dient der eine Server dazu, die Kurznachrichten, die aus dem Festnetz kommen bzw. in dieses weitergeleitet werden, in ein Format umzuwandeln, das mit dem Mobilfunknetz kompatibel ist und umgekehrt. Nachteilig an dieser Lösung ist, dass nur elementare Kurznachrichtendienste, wie das Verschicken von Nachrichten zwischen zwei Endgeräten, unterstützt werden und insbesondere keine erweiterten Funktionen realisiert sind, wie sie für Messaging-Systeme, beispielsweise in Nebenstellenanlagen, notwendig sind, um erweiterte Kurznachrichtenfunktionalitäten zur Verfügung zu stellen, auch wenn nicht alle Endgeräte kurznachrichtenfähig sind.

Dieser Nachteil besteht auch bei dem in der WO 01/08392 A2 offenbarten Server zur Steuerung von Telekommunikationsgeräten und/oder Computern, bei dem ebenfalls keine erweiterten Messagingmöglichkeiten zur Verfügung stehen.

In der DE 199 25 220 A1 ist ein Verfahren und eine Anordnung zum Versenden einer Nachricht offenbart, bei der insbesondere SMS-Nachrichten in heterogenen Netzwerken durch spezielle Server zwischen den unterschiedlichen Netzen weitergeleitet werden. Dabei nimmt ein solcher Server stellvertretend für den Benutzer eines nicht SMS-fähigen Netzes, die für den Benutzer bestimmten Nachrichten entgegen, und zeigt ihm das Vorhandensein von Nachrichten an. Anschließend besteht dann die Möglichkeit, die Nachricht abzurufen bzw. an ein anderes Endgerät weiterleiten zu lassen. Hierbei ist von Nachteil, dass kein für den Benutzer transparentes Verfahren zur Benutzung von SMS-Diensten in nicht SMS-fähigen Teilnetzen zur Verfügung gestellt wird. Die Notwendigkeit, dass der Benutzer sich die Nachrichten beim Server abholt bzw. selbst dafür sorgt, dass sie an ein entsprechendes Endgerät weitergeleitet werden, schränkt die Flexibilität und die Benutzergruppen dieser Lösung ein.

Das in der DE 199 56 023 A1 dargestellte Verfahren zur Übertragung von Nachrichten zwischen mindestens einer Zentrale und einem Endgerät sowie einer Anpassungsvorrichtung dafür, ermöglicht eine Aufbereitung von Daten unterschiedlicher Dienste für ein Endgerät mit bestimmten Fähigkeiten. Dabei sorgt die Anpassungsvorrichtung dafür, dass die Daten der unterschiedlichen Dienste in einer Art und Weise aufbereitet werden, dass das Endgerät sie verarbeiten kann. Nachteilig hierbei ist, dass keine Möglichkeit geschaffen wird, eine für die beteiligten Benutzer transparente Weiterleitung bzw. Zustellung von Kurznachrichten zu gewährleisten, auch wenn das betreffende Endgerät selbst keine Fähigkeiten zur Verarbeitung von Kurznachrichten bietet.

Aufgabe der Erfindung ist es daher, eine Lösung zu schaffen, mit der die Kommunikation zwischen kurznachrichtenfähigen Endgeräten (Mobilstationen und/oder Festnetzgeräten) einerseits und beliebigen Endgeräten einer Teilnehmergruppe und/oder eines Messaging-Systemes andererseits möglich wird.

Diese Aufgabe wird gemäß der Erfindung dadurch gelöst, dass Querverbindungsleitungs-Auswahlziffern aus der Rufnummer des absendenden Endgerätes bei der Auslieferung in Richtung des öffentlichen Telekommunikationsnetzes entfernt und bei Eingang einer Kurznachricht aus dem öffentlichen Telekommunikationsnetz in Richtung des ursprünglichen absendenden Endgerätes wieder eingefügt werden.

Ein solches Verfahren zum Austausch von Kurznachrichten (SMS) zwischen mobilen und stationären Endgeräten kann so unter der Benutzung von Benachrichtigungssystemen (Messaging-Systemen) und/oder weiterer stationärer Endgeräte einer Teilnehmergruppe für alle beteiligten Benutzer einfach und transparent ausgeführt werden. Die Kurznachrichtenkommunikation zwischen sogenannten Unified-Messaging-Systemen und mobilen und/oder stationären Telefonen wird hierdurch stark vereinfacht und auch Endgeräten und/oder Telefonanlagen zugänglich, die von Haus aus keine Kurznachrichtenfähigkeiten aufweisen.

Hierzu ermöglicht das Relay-Server-Element die bidirektionale Kommunikation über ein Kurznachrichtensystem (SMS) zwischen den Teilnehmern einer Teilnehmergruppe und beispielsweise Mobilfunknutzern. Hierzu kann das Relay-Server-Element über eine Konfigurationseinrichtung verfügen, über die für jeden Empfänger einer Kurzmitteilung festgelegt werden kann, über welchen Weg die netzwerkseitig eingehenden Kurzmitteilungen an ihn auszuliefern sind, etwa direkt an ein kurznachrichtenfähiges Telefon, per E-Mail auf einen angeschlossenen E-Mail-Server, an ein Internet-Protokoll-basiertes Telefon (Voice over IP) oder auf ein Unified-Messaging-System, d.h. auf ein serverbasiertes Nachrichtensystem, in dem Nachrichten über verschiedene Wege (E-Mail, Sprachmitteilung, Kurzmitteilung) an den Empfänger ausgeliefert werden können, wobei der Empfänger seine Präferenzen in einem Benutzerprofil festlegt.

Sendet der Absender einer Kurznachricht, der ein stationäres Endgerät, insbesondere ein Festnetztelefon, einen Personalcomputer, ein Internet-Protokoll-basiertes Telefongerät oder dgl. benutzt, mittels des von diesem Endgerät bereitgestellten Verfahrens eine SMS-Kurznachricht, enthält diese neben der zu versendenden Textmitteilung die Zielrufnummer des SMS-Empfängers und die Absenderkennung, unter der das absendende Endgerät zu erreichen ist. Die SMS-Nachricht wird entweder direkt oder indirekt über die Telekommunikationsnebenstellenanlage, oder indirekt über ein Serversystem, z.B. über einen Personalcomputer an ein E-Mail-System oder Unified-Messaging-System durch das Relay-Server-Element übermittelt. Hierbei kann ein beliebiges, vom Endgerät sowie vom Relay-Server-Element unterstütztes SMS-Transportprotokoll verwendet werden.

Das stationäre Endgerät kann z.B. ein Arbeitsplatzrechner mit Anschluss an ein Unified-Messaging-System sein, wobei der Benutzer die Kurzmitteilung von seinem Arbeitsplatzrechner mittels einer Unified-Messaging-System-Komponente (Client) an das System selbst versendet. Dieses fügt an die Kurzmitteilung die Absenderkennung des Teilnehmers an, die aus der Unified-Messaging-Konfiguration ermittelt wird und der Rufnummer entspricht, die als Zieladresse für den Fall der Rückantwort auf die gesendete SMS-Kurznachricht genutzt wird. Dann vermittelt das Unified-Messaging-System die Nachricht an das Relay-Server-Element weiter.

Um eine Adressierung des absendenden Endgerätes für an dieses gerichtete (Antwort-) Kurznachrichten zu ermöglichen, ist vorgesehen, dass aus einer in einer zentralen Vermittlungsstelle angelegten Routingtabelle eine bidirektionale Abbildung zwischen der Zielrufnummer des adressierten Endgerätes und der zugehörigen Kopfnummer der Telekommunikationsnebenstellenanlage gebildet wird. Bei Auslieferung der SMS-Kurznachricht in Richtung öffentliches Telekommunikationsnetz wird die entsprechende Querverbindungsleitungsauswahlziffer aus der Absenderrufnummer des absendenden Telefongerätes entfernt und bei Auslieferung Richtung Relay-Server-Element an ein Endgerät einer Teilnehmergruppe und/oder Benachrichtigungssystems automatisch in dessen Zielrufnummer wieder eingefügt.

Das Entfernen der Querverbindungsleitungsauswahlziffer aus der Absenderrufnummer hat für den empfangenden Teilnehmer im öffentlichen Kommmunikationsnetz, der eine Kurzmitteilung eines an das Relay-Server-Element angeschlossenen Teilnehmers erhält, den Vorteil, dass ihm diejenige Absenderrufnummer auf seinem Display angezeigt wird, unter der er den absendenden Teilnehmer auch telefonisch erreicht.

Dies wäre nicht der Fall, wenn die Querverbindungsleitungsauswahlziffer weiterhin in der Absenderrufnummer, die mit der SMS-Kurzmitteilung übertragen wird, enthalten bliebe. Will der die ursprüngliche SMS-Kurznachricht erhaltende Teilnehmer auf diese reagieren und mittels SMS-Kurznachricht antworten, so kann er als Zielrufnummer die ihm angezeigte Absenderrufnummer (d.h. ohne darin enthaltene Querverbindungsleitungsauswahlziffern) verwenden, da diese automatisch aus der in der zentralen Vermittlungsstelle angelegten Routing-Tabelle wieder eingefügt wird, so dass eine vollständige, zustellungsfähige SMS-Zielrufnummer des adressierten Endgerätes und der zugehörigen Kopfnummer der Telekommunikationsnebenstellenanlage gebildet wird, die dann an das Relay-Server-Element zum Aufbau der entsprechenden Verbindung weitergereicht wird. Die hierzu verwendete zentrale Vermittlungsstelle übermittelt die Kurzmitteilung an die Nebenstellenanlage, die durch die Kopfnummer adressiert wird. Die Nebenstellenanlage vermittelt die Kurzmitteilung weiter an das über die Querverbindungsleitung angeschlossene Relay-Server-Element. Dieses sorgt dann für die bestimmungsgemäße Zustellung. Anhand von auf den adressierten Teilnehmer bezogenen Konfigurationsdaten kann das Relay-Server-Element auswählen, ob die Kurzmitteilung auf ein SMS-fähiges Festnetztelefon, auf ein Unified-Messaging-System, ein Internet-Protokoll-basiertes Telefon, eine E-Mail-Box oder über einen anderen Kommunikationsweg zugestellt werden soll.

Falls die zentrale Vermittlungsstelle keine Routing-Tabelle verwaltet, oder die Kopfnummer der empfangenden Teilnehmernummer nicht in der Routing-Tabelle registriert ist, so wird die Kurzmitteilung von der zentralen Vermittlungsstelle direkt an den adressierten Teilnehmer übermittelt. Hierbei kann die zentrale Vermittlungsstelle prüfen, ob das adressierte Endgerät in der Lage ist, überhaupt SMS-Kurzmitteilungen zu empfangen, d.h. ob es das Festnetz-SMS-Übertragungsprotokoll unterstützt. Ist dies nicht der Fall, kann die Kurzmitteilung beispielsweise nach dem aus der DE-G 201 02 259 bekannten Verfahren in eine Sprachmitteilung umgewandelt und als Audio-Information übertragen werden.

Wie dargelegt wird in der zentralen Vermittlungsstelle durch eine Konfigurationsvorrichtung eine Festlegung der Adressierung eingehender Kurzmitteilungen vorgenommen.

Es ist möglich, die Speicherung der bidirektionalen Abbildung zwischen Adressierung und der zugehörigen Kopfnummer entweder manuell oder automatisch vorzunehmen, im letztgenannten Fall durch eine einfache Registrierungsprozedur, die das Relay-Server-Element über ein geeignetes Protokoll mit der zentralen Vermittlungsstelle durchführt.

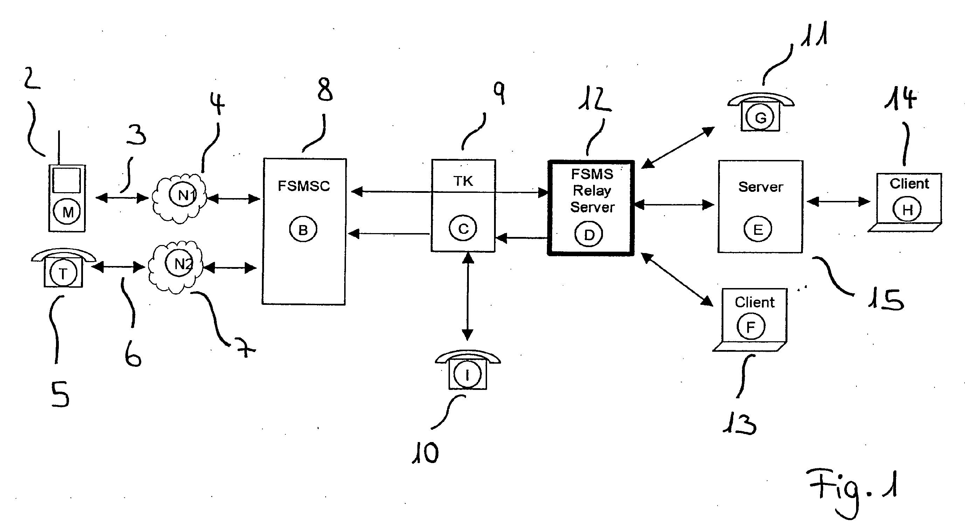

Die Erfindung ist nachstehend anhand der Zeichnung erläutert. Diese zeigt in
- Fig. 1: eine schematische Übersicht über ein erfindungsgemäßes System zur Weiterleitung und Entgegennahme von Kurznachrichten unter Einschluss einer zentralen Vermittlungsstelle, einer Telekommunikationsnebenstellenanlage und eines Relay-Server-Elementes,
- Fig. 2: eine schematische Übersicht über den Versand einer SMS-Kurznachricht ins öffentliche Telekommunikationsnetz unter Beteiligung einer Telekommunikationsnebenstellenanlage,
- Fig. 3: eine schematische Übersicht über den Empfang einer SMS-Kurznachricht aus dem öffentlichen Telefonnetz unter Beteiligung einer Telekommunikationsnebenstellenanlage,
- Fig. 4: eine schematische Übersicht über den Versand einer SMS-Kurznachricht ins öffentliche Telekommunikationsnetz ohne Beteiligung einer Telekommunikationsnebenstellenanlage,
- Fig. 5: eine schematische Übersicht über den Empfang einer SMS-Kurznachricht aus dem öffentlichen Telekommunikationsnetz ohne Beteiligung einer Telekommunikationsnebenstellenanlage.

Ein allgemein mit 1 bezeichnetes Kommuikationssystem weist ein Mobiltelefon 2 mit einer drahtlosen Verbindung 3 an ein öffentliches SMS-fähiges Mobilfunknetz 4 und ein Festnetztelefon 5 mit einer drahtgebundenen Verbindung 6 zu einem öffentlichen SMS-fähigen Festnetz 7 sowie eine zentrale Vermittlungsstelle 8 für Festnetzkurzmitteilungen auf. Eine Telekommunikations-Nebenstellenanlage 9 dient zum Anschluss stationärer Endgeräte wie eines SMS-fähiges Telefones 10. Desweiteren ist ein SMS-fähiges Internet-Protokoll-basiertes Telefon 11 für eine direkte Kommunikation über einen erfindungsgemäßen FSMS-Relay-Server 12 darstellt. Eine solche direkte Kommunikation kann auch mit einem SMS-Client 13 erfolgen. Ein weiterer Client 14 kann über einen üblichen Server 15 für Client/Server-basierte Kommunikationssysteme (z.B. E-Mail, Unified-Messaging-System) mit dem FSMS-Relay-Server 12 kommunizieren.

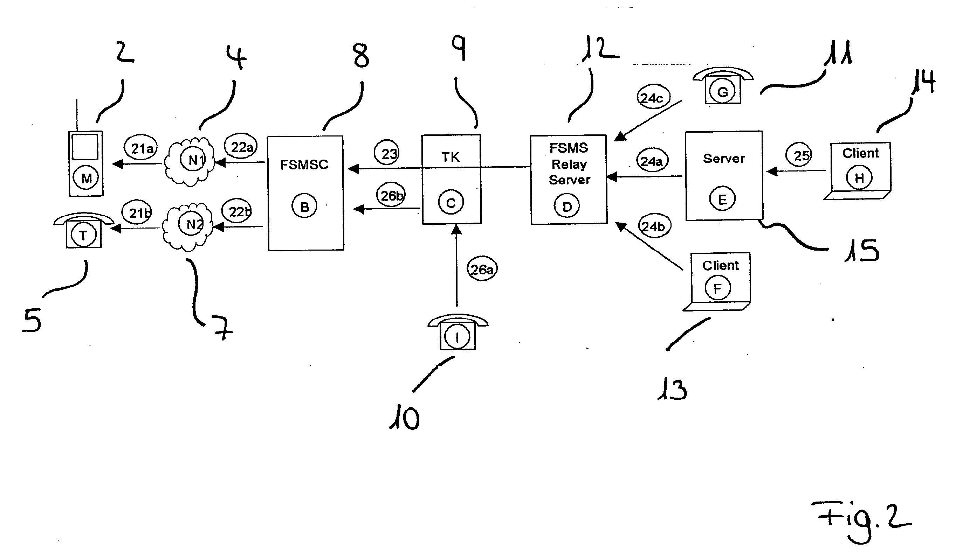

Der Versand einer Nachricht ins öffentliche Netz 6 oder 7 unter Beteiligung einer TK-Nebenstellenanlage erfolgt gemäß Fig. 2 wie folgt:

Von einem Client 14 wird eine SMS-Kurzmitteilung durch Vermittlung des zwischengeschalteten Servers 15 über die Leitung 25 abgesandt. Von dort erfolgt eine Weiterleitung über die Leitung 24a an den FSMS-Relay-Server 12. Dieser übermittelt die SMS-Kurzmitteilung mittels erweiterter Rufnummer über eine Querverbindungsleitung 23, über die er an die Telekommunikationsnebenstellenanlage 9 angeschlossen ist, an die zentrale Vermittlungsstelle für Festnetz-Kurzmitteilungen 8. Von dort wird die Nachricht entweder drahtlos über die Luftschnittstelle 22 an das öffentliche Mobilfunknetz 4 weitergeleitet, wo sie schließlich über die weitere Luftschnittstelle 21a im Mobilfunkgerät ankommt. Alternativ hierzu wird sie über die Festnetzverbindung 22b über das öffentliche Festnetz 7 und die Leitung 21b an ein Festnetztelefon 5 ausgeliefert. Über die Leitungen 24b und 24c kann auch eine direkte Übermittlung der SMS-Kurzmitteilung von den Endgeräten 11 und 13 an den FSMS-Relay-Server 12 erfolgen. Ohne Zwischenschaltung dieses Servers 12 kann von dem Endgerät 10 über die Telekommunikationsnebenstellenanlage 9 auch direkt eine SMS-Kurzmitteilung über die Leitung 26b an die zentrale Vermittlungsstelle 8 erfolgen.

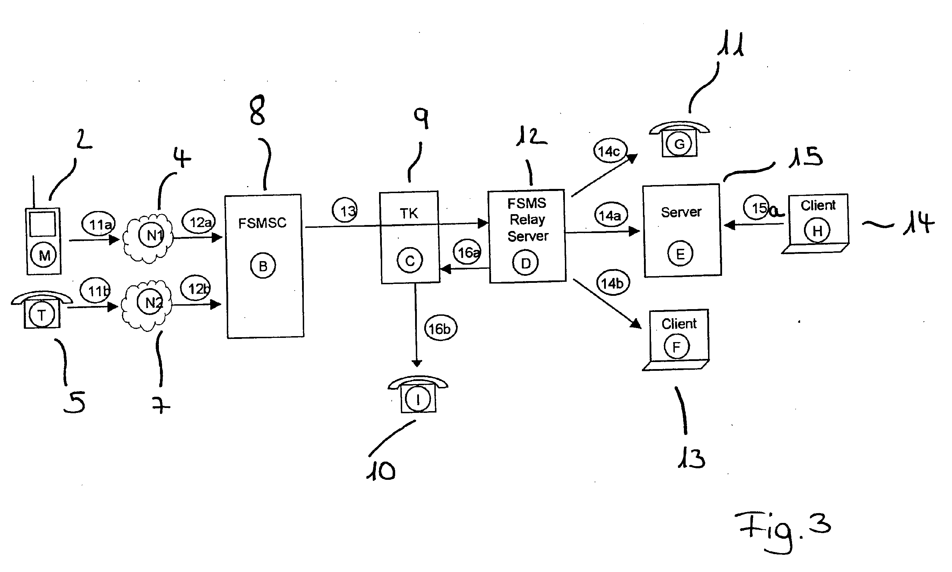

Figur 3 zeigt den Empfang von SMS-Kurznachrichten aus dem öffentlichen Netz unter Beteiligung einer Telekommunikationsnebenstellenanlage 9. Von der Mobilstation 2 oder einem Festnetztelefon 5 wird eine SMS-Kurznachricht über den drahtungebundenen Weg 11a und ein zellulares Mobilfunknetz 4 oder eine drahtgebundene Verbindung 6 und ein öffentliches Festnetz 7 an eine Zielrufnummer im Festnetz abgesetzt. Diese geht über die Luftschnittstelle 12a oder die Festnetzschnittstelle 12b in der zentralen Vermittlungsstelle 8 für Festnetzkurzmitteilungen ein. Über die Leitung 13 wird die SMS-Kurzmitteilung mittels erweiterter Rufnummer an das Relay-Server-Element 12 weitergeleitet, das mittels einer Querverbindungsleitung an eine Telekommunikationsnebenstellenanlage 9 angeschlossen ist. In diesem SMS-Relay-Server 12 erfolgt eine Umsetzung der Zielrufnummer auf eine Endgeräteadresse und eine direkte oder indirekte Übermittlung der SMS-Kurznachricht zum Endgerät im Endgerätenetz. Eine Weiterleitung kann über die Leitung 14a mittels des unterstützten Kommunikationsprotokolls an den Server 15 für Client/Server-basierte Kommunikationssysteme (z.B. E-Mail, Unified-Messaging-System) erfolgen. Der daran angeschlossene Client 14 kann auf die SMS-Kurzmitteilung indirekt über die Vermittlung des zwischengeschalteten Servers 15 über die Leitung 15a zugreifen. Die Auslieferung der SMS-Kurzmitteilung vom Relay-Server-Element 12 kann aber auch über die Leitung 14b unmittelbar an den SMS-Client 13 oder über die Leitung 14c an ein SMS-fähiges, Internet-Protokoll-basiertes Telefon 11 erfolgen. Auch ist es möglich, eine SMS-Kurzmitteilung vom SMS-Relay-Server 11 an ein Endgerät 10 auszuliefern, das nicht in einem Local-Area-Network (LAN) eingebunden ist, sondern über eine Leitung 16b mit der Telekommunikationsanlage 9 verbunden ist, wobei die Übermittlung vom SMS-Relay-Server 12 zur Telekommunikationsnebenstellenanlage 9 über die Leitung 16a erfolgt.

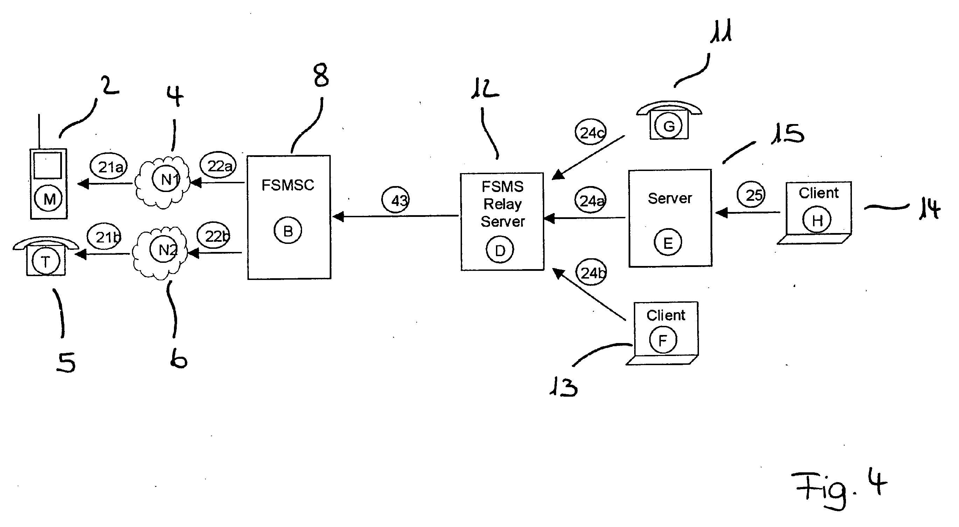

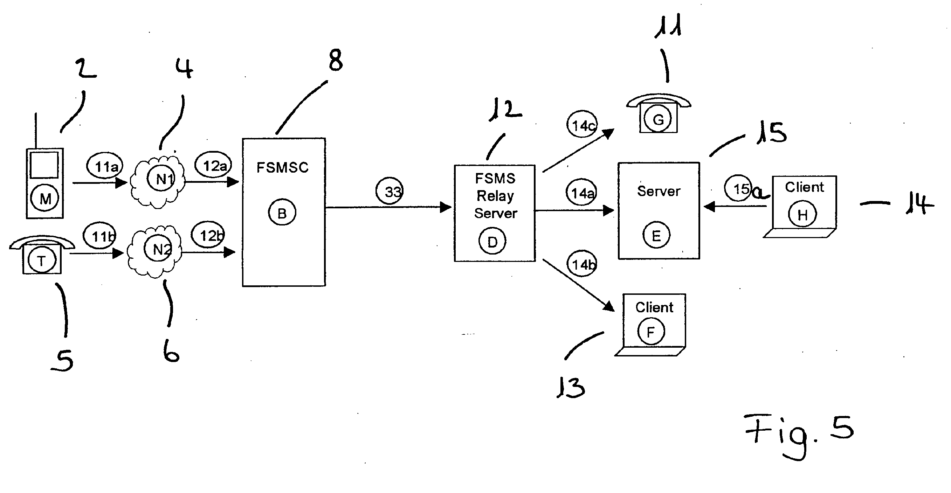

Figuren 4 und 5 zeigen den Versand bzw. den Empfang von SMS-Kurznachrichten ins bzw. aus dem öffentlichen Netz ohne Beteiligung einer Telekommunikationsnebenstellenanlage 9.

Auf den Leitungen 21a und 21b erfolgt der Versand einer SMS-Kurzmitteilung mit einer Zielrufnummer im Festnetz. Ein Client 14 initiiert über die Leitung 25 den Versand einer SMS-Kurzmitteilung über die Vermittlung eines zwischengeschalteten Servers 15, z.B. über ein Unified-Messaging-System, ein E-Mail-System oder dgl. Auf den Leitungen 24a, 24b und 24c erfolgt eine direkte oder indirekte Übermittlung der SMS-Kurzmitteilung (direkt vom Client 13 über die Leitung 24b oder von einem Internet-Protokoll-basierten Endgerät 11 über die Leitung 24c bzw. über die Leitung 24a vom Server 15 über das jeweils unterstützte Kommunikationsprotokoll zum erfindungsgemäßen FSMS-Relay-Server 12). Von dort erfolgt über die Leitung 43 eine Übermittlung der SMS-Kurzmitteilung mittels erweiterter Rufnummer direkt an die zentrale Vermittlungseinheit 8. Die SMS-Kurzmitteilung wird von dort über die Luftschnittstelle 22a oder die Leitung 22b in das drahtlose öffentliche Netz 4 oder das drahtgebundene öffentliche Netz 6 gesendet. Wie in Figur 2 dargestellt, kann auch eine direkte Zustellung einer Kurzmitteilung von einem Endgerät 10 über eine Telekommunikationsnebenstellenanlage an die zentrale Vermittlungsstelle 8 ohne Vermittlung durch den FSMS-Relay-Server 12 erfolgen.

Beim Empfang von Kurznachrichten (Figur 5) erfolgt die Übermittlung der SMS-Kurzmitteilung von einem Mobilfunkgerät 2 oder einem Festnetztelefon 5 über die drahtungebundene Leitung 11a oder die drahtgebundene Verbindung 11b in das jeweilige Netz 4 oder 6, wobei die SMS-Kurznachricht über die Leitungen 12a oder 12b auf die zentrale Vermittlungsstelle 8 übergeht. Von dort erfolgt eine Weiterleitung über die Leitung 33 an den FSMS-Relay-Server 12. Dieser setzt die Zielrufnummer auf eine Endgeräteadresse um, es erfolgt eine direkte oder indirekte Übermittlung der SMS-Kurzmitteilung zum Endgerät im Netz, z.B. über die Leitung 14b an den Client 13, über die Leitung 14c an ein Internet-Protokoll-basiertes Telefonendgerät 11 oder über den Server 15 an den Client 14, der sich über die Leitung 15a die SMS-Kurzmitteilung abholt, d.h. es erfolgt in diesem Fall eine indirekte Übermittlung der SMS-Kurzmitteilung über die Vermittlung des zwischengeschalteten Servers 15.

## Patentansprüche

1. Verfahren zur Weiterleitung und Entgegennahme von Kurznachrichten im öffentlichen Telekommunikationsnetz unter Beteiligung kurznachrichtenfähiger Endgeräte und beliebiger Endgeräte einer Teilnehmergruppe und/oder Benachrichtigungssysteme, wobei die Nachrichten über ein Relay-Server-Element an Endgeräte einer Teilnehmergruppe und/oder Benachrichtigungssysteme weitergereicht bzw. von diesen entgegengenommen werden,
**dadurch gekennzeichnet,**
**dass** Querverbindungsleitungs-Auswahlziffern aus der Rufnummer des absendenden Endgerätes (11,13,14) bei der Auslieferung in Richtung des öffentlichen Telekommunikationsnetzes (4,7) entfernt und bei Eingang einer Kurznachricht aus dem öffentlichen Telekommunikationsnetz (4,7) in Richtung des ursprünglichen absendenden Endgerätes (11,13,14) wieder eingefügt werden.

2. Verfahren nach Anspruch 1,
**dadurch gekennzeichnet,**
**dass** aus einer in einer zentralen Vermittlungsstelle (8) angelegten Routingtabelle eine bidirektionale Abbildung zwischen der Zielrufnummer des adressierten Endgerätes und der zugehörigen Kopfnummer der Telekommunikationsnebenstellenanlage (9) gebildet wird.

3. Verfahren nach Anspruch 2,
**dadurch gekennzeichnet,**
**dass** in der zentralen Vermittlungsstelle (8) durch eine Konfigurationsvorrichtung eine Festlegung der Adressierung eingehender Kurzmitteilungen vorgenommen wird.

4. Verfahren nach Anspruch 2 und/oder 3,
**dadurch gekennzeichnet,**
**dass** eine manuelle Speicherung der bidirektionalen Abbildung zwischen der Adressierung und der zugehörigen Kopfnummer vorgenommen wird.

5. Verfahren nach Anspruch 2 und/oder wenigstens einem der folgenden Ansprüche,
**dadurch gekennzeichnet,**
**dass** eine automatische Speicherung der bidirektionalen Abbildung zwischen der Adressierung und der zugehörigen Kopfnumer durch ein Registrierungsverfahren des Relay-Server-Elementes (12) mit der zentralen Vermittlungsstelle (8) über ein Übertragungsprotokoll erfolgt.

6. Verfahren nach Anspruch 1 und/oder wenigstens einem der folgenden Ansprüche,
**dadurch gekennzeichnet,**
**dass** von jedem Teilnehmer einer Teilnehmergruppe (11,13) und/oder eines Messaging-Systems (15) über eine Konfigurationsvorrichtung im Relay-Server-Element (12) festgelegt werden kann, an welche Art von Endgerät (11,13,14) die versandte Kurzmitteilung ausgeliefert werden soll.

7. Verfahren nach Anspruch 1 und/oder wenigstens einem der folgenden Ansprüche,
**dadurch gekennzeichnet,**
**dass** an dem adressierten Endgerät (2,5) in einem Telekommuniktionsnetz (4,7) durch Entfernen der Querverbindungsleitungs-Auswahlziffern die Absenderrufnummer angezeigt wird, unter der ein jeweiliger Fernsprechteilnehmer auch telefonisch erreichbar ist.

8. Verfahren nach Anspruch 2 und/oder wenigstens einem der folgenden Ansprüche,
**dadurch gekennzeichnet,**
**dass** bei Verwendung der auf einem Endgerät (2,5) in einem Telekommunikationsnetz (4,7) angezeigten Absenderrufnummer als Zielrufnummer für eine Kurzmitteilung automatisch in der zentralen Vermittlungsstelle (8) eine Konvertierung in die tatsächliche Kurznachrichtenabsenderufnummer einschließlich einer Querverbindungsleitungsauswahlziffer und eine Weiterleitung an das Relay-Server-Element (12) erfolgt.

9. Kommunikationssystem, insbesondere Kurznachrichten-System (SMS = Short Message System) zur Durchführung eines Verfahrens nach Anspruch 1 und/oder wenigstens einem der folgenden,
**gekennzeichnet durch**
eine zentrale Vermittlungseinrichtung (8) zwischen Endgeräten (11,13,14) einer Teilnehmergruppe und/oder einem diese steuernden Server-System (15) einerseits und einer Telekommunikations-Nebenstellenanlage (9) der Teilnehmergruppe.

10. Kommunikationssystem nach Anspruch 9,
**gekennzeichnet durch**
ein Relay-Server-Element (12) zur Weiterleitung und/oder Entgegennahme von Kurzmitteilungen an/von Endgeräten (11, 13,14) einer Teilnehmergruppe und/oder Messaging-Systemen (15).

11. Kommunikationssystem nach Anspruch 9 und/oder 10,
**dadurch gekennzeichnet,**
**dass** das Relay-Server-Element (12) eine Konfigurationsvorrichtung zur Festlegung der Adressierung eingehender Kurzmitteilungen aufweist und verwaltet.

12. Kommunikationssystem nach Anspruch 9 und/oder wenigstens einem der folgenden Ansprüche,
**dadurch gekennzeichnet,**
**dass** die zentrale Vermittlungsstelle (8) eine Routing-Tabelle zur Ablage einer bidirektionalen Abbildung zwischen der Adressierung und der zugehörigen Kopfnummer einer Telekommunikationsnebenstellenanlage (9) aufweist.
